# EUROPÄISCHE PATENTSCHRIFT

(11) **EP 0 493 725 B1**
(45) Veröffentlichungstag und Bekanntmachung des Hinweises auf die Patenterteilung: **14.02.1996**
(21) Anmeldenummer: 91121343.7
(22) Anmeldetag: 11.12.1991
(51) Int. Cl.: D21B 1/32, D21B 1/02

(54) **Vorrichtung zum Disintegrieren von flexiblen Verpackungsstoffen**
Device for disintegration of flexible packaging material
Dispositif pour la désintégration de matériel d'emballage flexible

(30) Priorität: 29.12.1990 DE 4042227
(43) Veröffentlichungstag der Anmeldung: 08.07.1992
(73) Patentinhaber: PWA INDUSTRIEPAPIER GmbH, D-83064 Raubling (DE)
(72) Erfinder: Menges, Wilhelm, W-8204 Brannenburg (DE)
(74) Vertreter: Dr. Fuchs, Dr. Luderschmidt Dr. Mehler, Dipl.-Ing. Weiss Patentanwälte

(56) Entgegenhaltungen:
- AT-A- 378 792
- DE-B- 2 514 162
- GB-A- 2 096 919
- US-A- 4 812 205

## Beschreibung

Die Erfindung betrifft eine Vorrichtung zum Disintegrieren von flexiblen Verpackungsstoffen. Der Begriff "flexible Verpackungsstoffe" ist gewählt worden, um die betroffenen Stoffe von steifen Verpackungsmaterialien, wie Metall, Holz, fester Kunststoff und dergl. zu unterscheiden. Die Stoffe, die hier im Rahmen der Erfindung gemeint sind, sind im wesentlichen auf Papierstoffen als Basis beruhende Verpackungsmaterialien wie Papier, Karton und Pappe selbst sowie Verbundstoffe, die aus einem solchen Material in Verbindung mit einer Kunststoffolie oder einer Folienbeschichtung bestehen. Auch steifere Kartons und Pappen sollen mit durch den Begriff "flexibel" umfaßt sein. Zwar zählen isolierte Kunststoffolien im Grunde genommen auch zu den betroffenen Verpackungsstoffen, es geht vorliegend jedoch mehr um Mischungen, die zumindest auch papierähnliche Anteile enthalten. Der hier gemeinte Rohstoff ist im wesentlichen Altpapier in seinen unterschiedlichsten Fraktionen und Zusammensetzungen.

Altpapier wird heutzutage in großem Umfang in der papiererzeugenden Industrie wieder als Rohstoff eingesetzt. Dabei handelt es sich zum überwiegenden Teil jedoch um sog. sortiertes Altpapier, welches bei seiner Wiederdisintegration im allgemeinen keine besonderen Probleme bietet. Es besteht jedoch aus Umweltgründen und aus Gründen der Rohstoffverwertungsökonomie das Bedürfnis, möglichst sämtliche Altpapiere wie auch die aus der herkömmlichen Altpapieraufbereitung anfallenden Abfallstoffe zumindest insoweit aufzuarbeiten, daß alle sinnvoll wiederverwendbaren Materialien einer erneuten Nutzung zugeführt werden.

Die Altpapierauflösung erfolgt bisher im allgemeinen in einem Stoffauflöser, einem sog. Pulper, der aus einem Trog mit oberer oder seitlicher Beschickungsöffnung besteht, und an dessen Boden oder an dessen Seitenwand sich ein angetriebener Impeller befindet, mit dessen Hilfe das in den Pulper eingebrachte Altpapier in wässriger Suspension aufgeweicht und zu seinen Faserbestandteilen dispergiert wird. Ein Pulper für Altpapierauflösung ist im allgemeinen mit Einrichtungen versehen, mit deren Hilfe bereits ein großer Anteil nicht-faseriger Fremdstoffe aus der Faserstoffsuspension ausgeschieden werden kann.

In der Turbulenz des Pulperinhaltes verspinnen sich großflächige oder langgestreckte Gegenstände, die nicht zerfaserbar sind, wie beispielsweise Drähte, Schnüre, Stoffetzen, größere Folienabschnitte und dergl. zu einem sog. Zopf, der sich langsam weiterbildet, wenn er mit geringer Geschwindigkeit ständig aus dem Pulper abgezogen wird. An bestimmten Stellen der Pulperströmung sammeln sich ferner bevorzugt kleinere Kunststoffolienteile und dergl. an. Auch sie können intermittierend aus dem entsprechenden Bereich aus dem Pulper weitgehend abgezogen werden. Derartige Fremdbestandteile werden als Leichtschmutz bezeichnet. Weiterer Leichtschmutz fällt noch in der nachfolgenden Sortierung des Faserstoffes an.

Ein Aufbereitungsverfahren, welches sich eines Pulpers für die erste Auflösung des Altpapieres bedient, ist in der AT-A-378 792 beschrieben. In dieser Druckschrift ist als Alternative zum Pulper zwar auch noch die Möglichkeit des Einsatzes eines herkömmlichen Holländers erwähnt, dabei handelt es sich aber einerseits um ein nur chargenweise durch jeweiliges Befüllen und anschließendes Entleeren über ein Bodenventil betreibbares Aggregat, andererseits ist dieses Aggregat für Altpapier mit hohem Fremdstoffanteil ungeeignet, da durch diesen die Gefahr einer Beschädigung der Mahlwerkzeuge besteht.

Bisher werden alle in der Altpapieraufbereitung ausgeschiedenen Fremdstoffe, d.h. sog. Schwerschmutz, der sich in einer Bodenfalle des Pulpers ansammelt und aus Steinen, Metallteilen und dergl. bestehen kann, der oben erwähnte Leichtschmutz und der Zopf der Entsorgung auf einer Deponie zugeführt. Lediglich die Faserstoffe, insoweit sie sich von dem eingesetzten Material mit den herkömmlich allgemein verwendeten Methoden trennen lassen, werden als Halbstoff wieder in der Papierfabrikation eingesetzt.

Mit dem herkömmlichen Pulper ist ein Zugriff nicht auf sämtliche im Altpapier enthaltenen Faserstoffe möglich, insbesondere, wenn es sich um das Substrat kunststoffkaschierter Verpackungspapiere handelt, und er ist auch nicht in der Lage, den von der papierherstellung aus gesehen als Schmutz bezeichneten Anteil für eine Wiedergewinnung darin enthaltener Rohstoffe vorzubereiten.

Der Erfindung liegt daher die Aufgabe zugrunde, eine Vorrichtung zu schaffen, die die Beschränkungen des herkömmlichen Pulpers überwindet, und die darüber hinaus eine solche Anpassungsfähigkeit aufweist, daß mit ihr je nach Bedarf unterschiedliche Verpackungsstoffsorten, gemischtes Altpapier wie Haushaltssammelware und aus der herkömmlichen Altpapieraufbereitung abgeschiedene, weitgehend nicht mehr faserstoffhaltige Verpackungsstoffe insoweit aufbereitet werden können, daß eine pumpfähige Suspension entsteht, die einer weiteren Zerfaserung und/oder Fraktionierung in ihre verschiedenen Bestandteile zugänglich ist. Wenn im Zusammenhang dieser Anmeldung von Disintegration oder Zerfaserung die Rede ist, so ist damit lediglich die Auflösung der Papierstoffanteile des Rohmaterials in einzelne Fasern gemeint. Kunststoffolien und dergl. können einhergehend nur zerkleinert werden.

Die vorstehend genannte Aufgabe wird erfindungsgemäß durch eine in ihren Grundmerkmalen im Patentanspruch 1 beschriebene Vorrichtung gelöst.

Es hat sich gezeigt, daß für die Aufbereitung der hier betroffenen Verpackungsrohstoffe im allgemeinen zwei unterschiedliche Zerkleinerungsschritte erforderlich sind, wobei der erste Zerkleinerungsschritt im allgemeinen dazu dient, das Material derart zu vergleichmäßigen, daß es in wässriger Suspension schon pump- oder förderfähig ist, und der zweite Schritt die Aufgabe übernimmt, das Material in kleine Flächenteilchen im Bereich von 5-15 mm größtem Durchmesser, vorzugsweise im Bereich von 8-12 mm größtem Durchmesser zu zerteilen, so daß einerseits an diesen kleinen Flächenstücken durch Einwirkung mechanischer Energie gegebenenfalls eine Auftrennung des Rohstoffes in Faser- und Kunststoffbestandteile erfolgen kann, und daß die Suspension mit Teilchen der angegebenen Größenordnung auch mittels Sieben sortierfähig wird.

Wenn im vorliegenden Zusammenhang von Zerkleinerungsaggregaten gesprochen wird, so müssen diese nicht nur eine schneidende oder zerteilende Funktion ausüben, sie können ferner auch eine Art quetschende und disintegrierende Funktion ausüben, was von den für den speziellen Einsatzfall ausgewählten Werkzeugen abhängt.

Zumindest der zweite Zerkleinerungsschritt findet in wässriger Suspension statt.

Entsprechend den vorstehend genannten Grundanforderungen besteht die erfindungsgemäße Vorrichtung im Kern aus einem trogbildenden, im wesentlichen geschlossenen Gehäuse. Trogbildend deshalb, weil in dem Gehäuse jeweils eine bestimmte Menge des verarbeiteten Verpackungsstoffes in wässriger Suspension zugegen ist, und weitgehend geschlossen, damit bei Spritzen der Suspension und dergl. der Stoff innerhalb der Vorrichtung gehalten wird. Das Gehäuse ist zumindest in seinem unteren Teil als eine hohlzylindrische Wanne ausgebildet, in der sich ein von außen angetriebenes Förderorgan bewegt. Im Fall der liegend zylindrischen Ausbildung des Gehäuses handelt es sich vorzugsweise um eine parallel zur Zylinderachse verlaufende, rotierbar angetriebene Welle, die mit radial abstehenden Förder- bzw. Agitationselementen versehen ist. Diese können einfache Arme oder paddelförmig ausgebildete Elemente sein. Die Art der Ausbildung der Förder-bzw. Agitationselemente hängt auch davon ab, mit welchen Suspensionskonsistenzen im einzelnen Anwendungsfall gearbeitet werden soll.

Die Vorrichtung ist mit einem Rohstoffzuführschacht versehen, der sich im allgemeinen von der Oberseite des Gehäuses nach oben erstreckt und in dessen Verlauf ein erstes Zerkleinerungsaggregat angeordnet ist. Die Vorrichtung weist weiterhin einen Austrittsschacht auf, der sich vorzugsweise seitlich an das Gehäuse anschließt und im weiteren Verlauf zweckmäßigerweise nach unten abgewinkelt oder gekrümmt ist. In diesem Austrittsschacht befindet sich ein zweites Zerkleinerungsaggregat. Zwischen Gehäuse und Austrittsschacht ist ein Überlaufwehr vorgesehen, welches im wesentlichen die Flüssigkeitsfüllhöhe im Gehäuse bestimmt, und über das die Überlaufsuspension in den Austrittsschacht gelangt.

Für den Fall, daß das Förderorgan aus einer horizontalen Welle mit Agitationsarmen besteht, ist der Rohstoffzuführschacht vorzugsweise so angeordnet, daß seine Austrittsöffnung auf diejenige Seite des Förderorgans gerichtet ist, an der sich dessen Agitationsarme in Abwärtsbewegung befinden.

Entsprechend ist der Austrittsschacht vorzugsweise an derjenigen Seite des Gehäuses angeordnet, an der sich die Agitationsarme in Aufwärtsbewegung befinden. Auf diese Weise wird sichergestellt, daß das aus dem Zuführschacht kommende Rohmaterial durch die Agitationsarme in den unteren Teil des Gehäusetroges mitgenommen und zum Teil in Umlauf gehalten wird und die auftauchenden Agitationsarme bereits vorbehandeltes Material zum Überlaufwehr hin hochnehmen, damit das Material kontinuierlich in das zweite Zerkleinerungsaggregat im Austrittsschacht gelangt.

Der Rohstoffzuführschacht läuft oberhalb des ersten Zerkleinerungsaggregates zweckmäßigerweise in einen Aufgabetrichter aus. Im Bereich dieses Trichters, zumindest aber oberhalb des ersten Zerkleinerungsaggregates, können am Zuführschacht Flüssigkeitszulaufstutzen vorgesehen sein. Wird beispielsweise kontaminierter Getränkekarton verarbeitet, kann es wünschenswert sein, schon an dieser Stelle Spülflüssigkeit, im allgemeinen Wasser, zuzugeben, damit das Abspülen restlichen ehemaligen Verpackungsinhaltes vom Verpackungsmaterial bereits an dieser Stelle beginnen kann. Bei Verarbeitung von unsortiertem Altpapier kann es wünschenswert sein, dieses mit Hilfe des ersten Zerkleinerungsaggregates vorerst trocken zu zerkleinern, so daß sich ein Flüssigkeitszulaufanschluß am Zuführschacht dann erübrigt.

Allgemein ist es sinnvoll, das zu verarbeitende Verpackungsmaterial vor Eintritt in die erfindungsgemäße Vorrichtung bereits von Schwerschmutz wie Steinen, Metallteilen und dergl. zu befreien, damit die Werkzeuge des ersten Zerkleinerungsaggregates geschont werden. Da dies jedoch nicht in allen Fällen vollständig möglich ist, sollte zumindest das erste Zerkleinerungsaggregat derart robust ausgebildet sein, daß ihm Fremdbestandteile der genannten Art nicht unbedingt schaden. Vor solchen Fremdbestandteilen zu schützen ist jedoch im allgemeinen das zweite Zerkleinerungsaggregat, welches die Feinzerkleinerung vornimmt. Zu diesem Zweck ist die erfindungsgemäße Vorrichtung in ihrem unteren Bereich zweckmäßigerweise mit einer Schwerschmutzsammelkammer ausgerüstet, die an ihrem Ende mit einer Schleuse versehen ist, durch die angesammelter Schwerschmutz aus dieser Kammer von Zeit zu Zeit nach unten ausgeschleust werden kann.

In besonders vorteilhafter Ausgestaltung ist diese Schwerschmutzsammelkammer als eine Art sich vom untersten Bereich des Gehäuses nach unten erstreckender Zyklon ausgebildet, dessen obere weitere Öffnung den Übergangsquerschnitt zum Gehäuse der Vorrichtung bildet, während das untere, spitze Ende des Zyklons mit der bereits erwähnten Schwerschmutzschleuse versehen sein kann. Diese Ausbildung ist sinnvoll, damit sich verwertbare Bestandteile der Suspension nicht in der Schwerschmutzsammelkammer absetzen und diese dann blockieren. Es ist daher angestrebt, in dem Zyklon eine nach unten gerichtete schraubenförmige Strömung und eine zentrale, nach oben gerichtete Strömung zu erzeugen, wie dies bei Geräten dieser Art üblich ist. Dies wird dadurch erreicht, daß am oberen weiten Ende des Zyklons ein tangentialer Einströmstutzen für Verdünnungsflüssigkeit, im allgemeinen Wasser, vorgesehen ist, welches dadurch in die schraubenförmige Strömung gebracht wird und Suspensionsbestandteile aus dem Gehäuseinhalt mitreißt. Um auch die zentrale Aufwärtsströmung bei möglicher Eindickung des Stoffes im Zyklon aufrechtzuerhalten, ist zweckmäßigerweise unten ein weiterer Einströmstutzen für Wasser vorgesehen, welches die Aufwärtsströmung unterstützen soll. Durch diese technische Ausbildung wird gewährleistet, daß sich einerseits in der Schwerschmutzsammelkammer kein verwertbares Rohmaterial ablagert, und daß andererseits der sich absetzende Schwerschmutz weitgehend von restlichem verwertbaren Material befreit wird.

Für bestimmte Anwendungszwecke wird im unteren Bereich des Gehäuses bzw. im unteren Bereich der Schwerschmutzsammelkammer zweckmäßigerweise auch noch ein Flüssigkeitsentnahmestutzen vorgesehen. Soll z.B. durch Inhaltsstoffe kontaminierter Getränkeverpackungskarton gewaschen werden, so ist es angebracht, die Spülflüssigkeit nicht mit in den weiteren Verarbeitungskreislauf gelangen zu lassen. Die am Zuführschacht oder an anderer Stelle des Gehäuses zugegebene frische Spülflüssigkeit kann zwar bis zu einem gewissen Ausmaß im Kreislauf verwendet werden, bei bestimmter Anreicherung mit Kontaminationsstoffen ist es jedoch angebracht, ständig einen Teil der Spülflüssigkeit über die Schwerschmutzsammelkammer aus dem System abzuführen und vorzugsweise einer biologischen Klärstufe zuzuleiten. Ein Teil der Spülflüssigkeit, welche die Vorrichtung mit dem bearbeiteten Rohstoff über den Austrittsschacht verläßt, wird im allgemeinen anschließend aus dem Stoff wieder ausgepreßt und in das Spülsystem der Vorrichtung zurückgeführt.

In bevorzugter Ausführungsform der Vorrichtung wird eine leichte Anpaßbarkeit für unterschiedliche Einsatzzwecke dadurch erreicht, daß die Zerkleinerungsaggregate als austauschbare Konstruktionseinheiten ausgeführt sind, die sich in eine entsprechende Aufnahme im jeweiligen Schacht leicht einsetzen lassen. Die Anordnung sollte gewährleisten, daß das Einsetzen der Zerkleinerungsaggregate mit guter Abdichtung nach außen erfolgt. Da es Anwendungsfälle gibt, bei denen ein im allgemeinen als Zerkleinerungsaggregat 2 vorgesehenes Aggregat auch als Zerkleinerungsaggregat 1 verwendet werden kann, sollten die Aufnahmen in beiden Schächten in gleicher Weise ausgebildet sein, so daß die Zerkleinerungsaggregate zwischen ihnen austauschbar sind.

In den Zerkleinerungsaggregaten verwendbare Werkzeuge sind an sich bereits aus anderen Einsatzzwecken bekannt, so daß bei der Grundausbildung dieser Werkzeuge auf bekannte Konstruktionselemente zurückgegriffen werden kann. Benötigt werden je nach Einsatzzweck rein schneidende Werkzeuge, die beispielsweise eine Vorzerkleinerung von gebrauchtem Getränkekarton für dessen Entkontaminierungswäsche bewerkstelligen sollen, wobei angestrebt wird, daß die Schnittstellen des beidseitig folienbeschichteten Materials möglichst durch das Kunststoffmaterial der Folien verschlossen werden, so daß das Spülmittel zumindest zu diesem Zeitpunkt noch nicht in den Faserverband des Substrates eindringen kann. In anderen Fällen ist es dagegen eher wünschenswert, wenn bei der Vorzerkleinerung im Zerkleinerungsaggregat 1 der Verpackungsstoff mehr oder minder in kleinere Abschnitte zerrissen wird. Das Zerkleinerungsaggregat 2 soll für eine Feinzerkleinerung sorgen und dabei möglichst gleichzeitig eine quetschende und disintegrierende Wirkung auf die erhaltenen kleinen Stücke ausüben. Das Zerkleinerungsaggregat 2 ist austrittsseitig in jedem Fall mit einer Siebplatte oder dergl. versehen, welche gewährleistet, daß nur Bestandteile genügender Feinheit das Zerkleinerungsaggregat endgültig verlassen können, während noch nicht genügend kleine Bestandteile im Aggregat selbst im Kreislauf weiterbearbeitet werden.

Im Rahmen der Erfindung verwendbare Zerkleinerungsaggregate können beispielsweise derart ausgebildet sein, daß sie zwei quer zur Durchtrittsrichtung des Materials verlaufende rotierende Werkzeugträgerwellen aufweisen, welche versetzt mit Werkzeugelementen besetzt sind, die mit denjenigen der benachbarten Welle wechselweise in Eingriff gelangen. Für eine rein schneidende Wirkung können die Werkzeugelemente aus rotierenden Kreismessern bestehen, welche jeweils mit einem Gegenmesser der benachbarten Welle in Eingriff sind. Der Abstand der Messer bestimmt im wesentlichen die Größe der erhaltenen Teilstücke. Die Wellen rotieren zweckmäßigerweise derart, daß die Bewegungsrichtung ihrer Werkzeugelemente an der Materialeintrittsseite des Zerkleinerungsaggregates aufeinander zu gerichtet ist, so daß die beiden Werkzeugwellen einen Einzugsspalt bilden, in den das zu zerkleinernde Material von alleine eingeführt wird.

Für eine mehr zerreißende Wirkung kann eine ähnliche Anordnung verwendet werden, bei der die wechselweise ineinandergreifenden Werkzeuge jedoch keine in ihrem Umfang geschlossenen Messer sind, sondern über den Umfang verteilt eine Reihe von Hackmessern aufweisen, wie diese in ähnlicher Weise auch zur Zerspanung von Holz verwendet werden.

Für die Feinzerkleinerung und disintegrierende Wirkung im Zerkleinerungsaggregat 2 kann ein um eine Querachse rotierender Werkzeugträger verwendet werden, der auf einer gedachten Zylindermantelfläche mit schneidenden und/oder mehr quetschenden Werkzeugelementen versehen ist, welche jeweils mit Gegenelementen an der Innenwand entsprechend zylindrisch gestalteter Gehäuseabschnitte des Aggregates zusammenwirken. Da der Austritt eines solchen Aggregates durch ein Sieb verschlossen ist, welches nur genügend kleine Partikel passieren läßt, nehmen die Werkzeuge des Werkzeugträgers das Material solange im Umfangsumlauf mit, bis es genügend zerkleinert ist.

Insoweit die erfindungsgemäße Vorrichtung dafür vorgesehen werden soll, die Abfallstoffe aus einer herkömmlichen Altpapierauflöseanlage weiter aufzubereiten, kann in einer speziell bestückten Vorrichtung ein Zerkleinerungsaggregat 1 mit Werkzeugen vorgesehen werden, die den aus dem Pulper abgezogenen und in die erfindungsgemäße Vorrichtung langsam eingeführten Zopf durch rotierende Messer in kleine Stücke zerteilen. Da der Zopf bei Verarbeitung von Altpapierballenware im allgemeinen auch die Bindedrähte der Ballen enthält, muß in diesem Fall das Werkzeug so robust ausgebildet sein, daß es in der Lage ist, auch diese Bestandteile zu zerteilen, die dann über die Schwerschmutzsammelkammer der Vorrichtung wieder ausgeschieden werden können. Ein solcher Zopfschneider besteht beispielsweise aus einer umlaufenden Scheibensäge mit Nachschärfvorrichtung. Das zu schneidende Material wird im Moment des Durchschnittes von zusammengehenden Halbschalen gehalten. Sie öffnen sich nach dem Schnitt und gestatten den Abwurf des Abschnittes und den weiteren ungestörten, langsamen Einlauf des Zopfes.

Bei der Mitverarbeitung des Zopfes kann es zweckmäßig sein, zwei erfindungsgemäße Vorrichtungen in Kaskade zu verwenden, wobei die erste der Zerkleinerung und weiteren Disintegration des Zopfmaterials dient und dann das so voraufbereitete Zopfmaterial zusammen mit dem übrigen erfaßten Leichtschmutz aus der Papieraufbereitung der nachgeschalteten Vorrichtung zugeführt wird.

Grundsätzlich ist es auch möglich, die erfindungsgemäße Vorrichtung durch mehrfaches Vorsehen von Teilbestandteilen zu ergänzen. So wäre es beispielsweise möglich, eine Vorrichtung mit zwei Rohstoffzuführschächten zu versehen, von denen beispielsweise der eine speziell für die Zerkleinerung eines Zopfes vorgesehen ist, während der andere für die Vorzerkleinerung einer anderen Materialkomponente vorgesehen werden kann, wenn es möglich ist, beide vorbehandelten Komponenten dann im Gehäusetrog zusammenzuführen.

Die beschriebene Vorrichtung bietet mit dem in ihr stattfindenden grundsätzlichen Verfahrensablauf und der Möglichkeit, die Werkzeuge entsprechend den jeweiligen Anforderungen auszuwählen, ein zur Lösung der gestellten Aufgabe bestens geeignetes Instrument. Eine zu hohe Zerkleinerung des Ausgangsmaterials ist im allgemeinen unerwünscht, da durch Zunahme von Schnitten auch die Anzahl der durch die Schnitte gekürzten Papierfasern ansteigt, wodurch der zurückgewonnene Papierstoff kurzfaseriger wird und somit an positiven Einsatzeigenschaften verliert. Andererseits ist eine gewisse Mindestzerkleinerung erforderlich, um einerseits Kunststoffschichten vom Fasersubstrat zu lösen und andererseits die gewonnene Suspension in einen Zustand zu überführen, in dem an ihr möglichst eine Feinsortierung vorgenommen werden kann.

Im folgenden wird die Erfindung unter Hinweis auf die beigefügten Zeichnungen noch zusätzlich erläutert. In den Zeichnungen stellen dar:
- Fig. 1: einen schematischen Aufriß einer Vorrichtung zum Disintegrieren von flexiblen Verpackungsstoffen,
- Fig. 2a- f: mögliche Ausführungsformen für die in die Vorrichtung nach Fig. 1 einsetzbaren Zerkleinerungsaggregate,
- Fig. 3: Teil eines Verfahrensschemas für eine erste Anwendung der Vorrichtung nach Fig. 1 und
- Fig. 4: Teil eines Verfahrensschemas für eine weitere beispielhafte Anwendung der Vorrichtung nach Fig. 1.

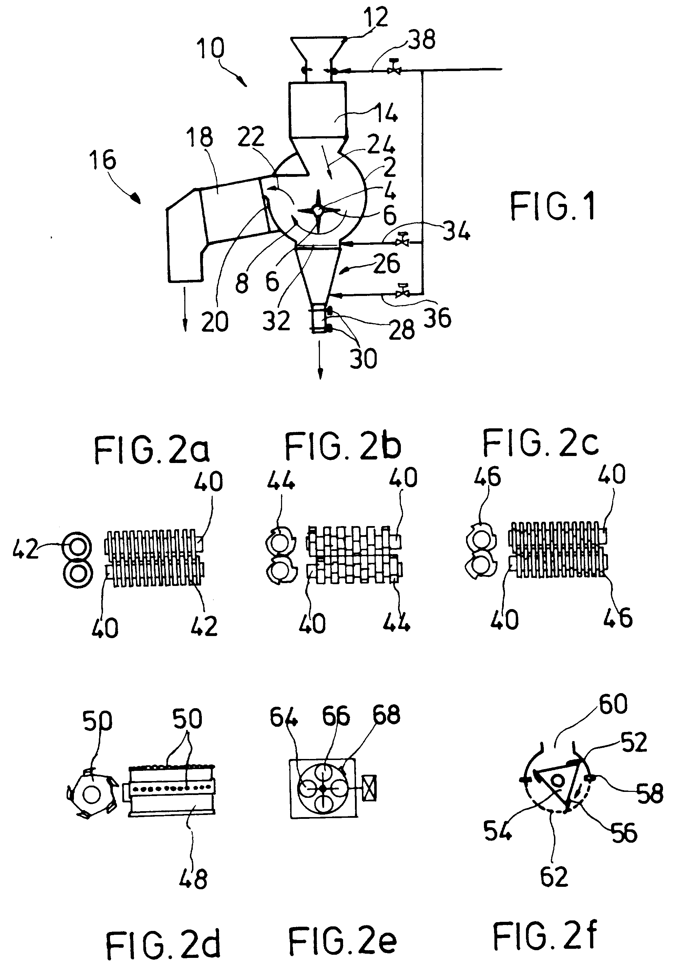

Die Fig. 1 zeigt einen schematischen Aufriß einer Vorrichtung zum Disintegrieren von flexiblen Verpackungsstoffen. Diese Vorrichtung weist ein im wesentlichen zylindrisches Grundgehäuse 2 auf, welches im Aufriß der Fig. 1 kreisförmig dargestellt ist und sich in der Richtung seiner Zylinderachse in die Zeichenebene hineinerstreckt. Im Gehäuse 2 ist eine drehbar angetriebene Welle 4 angeordnet, die parallel zur Zylinderachse des Gehäuses verläuft, jedoch etwas unterhalb der Mittelachse des Gehäuses angeordnet ist. Die Welle 4 ist mit radialen Rührarmen 6 versehen. Die Drehrichtung dieses aus Welle 4 und Rührarmen 6 bestehenden Förder- bzw. Rührelemenes ist durch einen Pfeil 8 angedeutet.

Von der Oberseite des Gehäuses 2 erstreckt sich nach oben ein Rohstoffzuführschacht 10, der an seinem oberen Ende mit einem Rohstoffaufgabetrichter 12 versehen ist. Im Rohstoffzuführschacht 10 ist, angedeutet durch das Rechteck 14, eine Einschubaufnahme für ein in Fig. 1 nicht dargestelltes erstes Zerkleinerungsaggregat vorgesehen. Bezogen auf die Darstellung der Fig. 1 schließt sich links seitlich an das Grundgehäuse 2 ein Austrittsschacht 16 an, der zuerst nur etwas nach unten geneigt verläuft, dann aber mittels eines Krümmers nach unten gerichtet ist. Der Austrittsschacht 16 enthält, angedeutet durch das Rechteck 18, eine Einschubaufnahme für ein weiteres Zerkleinerungsaggregat, welches ebenfalls in Fig. 1 nicht im einzelnen dargestellt ist. Es ist zu beachten, daß das Gehäuse 2 im Anschlußbereich des Austrittsschachtes 16 mit einer wehrartigen Überlaufkante 20 versehen ist, die die mögliche Flüssigkeitsfüllhöhe im Gehäuse bestimmt. Überschüssige Flüssigkeits- oder Suspensionsmenge läuft über diese Überlaufkante 20 in den Austrittsschacht 16 hinein und somit dem zweiten Zerkleinerungsaggregat 18 zu. Die Strömungsrichtung ist hier durch einen Pfeil 22 angedeutet. Der Rohstoffzuführschacht 10 ist mit seinen unteren Begrenzungswänden derart ausgerichtet, daß aus dem ersten Zerkleinerungsaggregat 14 austretendes Material entlang dem Pfeil 24 möglichst in denjenigen Bereich des Gehäuses 2 gelangt, in dem sich die Rührarme 6 in Abwärtsbewegung befinden.

An den unteren Teil des Grundgehäuses 2 schließt sich eine zyklonartig, d.h. nach unten verjüngt ausgebildete Schwerschmutzsammelkammer 26 an. Diese Schwerschmutzkammer 26 ist an ihrem unteren Ende mit einem Austrittsstutzen 28 versehen, der zwei hintereinanderliegende Verschlußschieber 30 aufweist, so daß dieser Stutzen als Schleuse für das periodische Ausschleusen von sich in der Sammelkammer 26 ansammelndem Schwerschmutz benutzt werden kann. An ihrem oberen Eintritt ist die Schwerschmutzsammelkammer durch ein Sieb 32 abgegrenzt, welches zerkleinertem Schwerschmutz aber auch disintegriertem Fasermaterial gestattet, sich in die Schwerschmutzsammelkammer hineinzubewegen, wohingegen grobe Rohstoffteile durch das Sieb 32 zurückgehalten werden, wodurch sie in dem durch das Rührwerk 4, 6 erzeugten Materialumlauf bleiben.

Damit sich die Schwerstoffsammelkammer 26 jedoch nicht langsam mit Faserstoff oder anderem Material anfüllt, wird sie in Form eines Zyklons, d.h. eines Wirbelsichters betrieben. Zu diesem Zweck ist im oberen Bereich der Sammelkammer ein tangentialer Flüssigkeitseintritt vorgesehen, so daß durch zugeführte Flüssigkeit an der Außenwand der Schwerschmutzsammelkammer eine konisch sich nach unten verjüngende, schraubenförmige Wirbelströmung erzeugt wird, die im unteren Bereich der Kammer umkehrt und zentral wieder nach oben strömt. Um eine solche Strömungsumkehr zu unterstützen, ist im unteren Bereich der Schwerschmutzsammelkammer 26 ein weiterer Flüssigkeitseintritt 36 vorgesehen. Der Austrittsstutzen 28 der Schwerschmutzsammelkammer 26 mit seinen beiden Schiebern 30 kann auch für das kontinuierliche oder intermittierende teilweise Abziehen von kontaminierter Spülflüssigkeit aus der Vorrichtung dienen.

Die in dem tangentialen Flüssigkeitseintritt 34 wie auch in dem unteren Flüssigkeitseintritt 36 zugegebene Flüssigkeitsmenge dient gleichzeitig als Suspensions- oder auch als Reinigungswasser für das verarbeitete Material. Für den Fall, daß im ersten Zerkleinerungsaggregat 14 bereits feucht oder naß gearbeitet werden soll, ist auch der Rohstoffzuführschacht 10 mit einem Flüssigkeitseinlauf 38 versehen. Dieser Flüssigkeitseinlauf 38 kann so ausgebildet sein, daß die Spülflüssigkeit radial von verschiedenen Seiten in den Rohstoffzuführschacht 10 eingespritzt werden kann.

Die Betriebsweise der Vorrichtung ist wie folgt: Über ein Förderband oder andere Zuführeinrichtungen wird zu disintegrierendes Verpackungsmaterial, im wesentlichen in Form von Altpapier oder dergl., möglichst kontinuierlich und vereinzelt in den Rohstoffaufgabetrichter 12 eingegeben. Soll das Material feucht weiterbearbeitet oder gewaschen werden, wird über den Flüssigkeitseinlauf 38 beispielsweise zusätzlich Wasser in den Rohstoffzuführschacht 10 eingespritzt. Das Material gelangt dann durch Schwerkraft in das erste Zerkleinerungsaggregat 14, in das es durch die Rotation der Werkzeuge zusätzlich eingezogen wird. In dem ersten Zerkleinerungsaggregat 14 wird der Rohstoff derart zerkleinert, daß er durch die Rühreinrichtung 4, 6 in wässriger Suspension umgewälzt und weiterbefördert werden kann. Im ersten Zerkleinerungsaggregat 14 wird auch eventuell im Rohmaterial noch enthaltener Schwerschmutz allgemeinen freigelegt, der sich dann in der Schwerschmutzsammelkammer 26 absetzen kann und somit nicht in das zweite Zerkleinerungsaggregat 18 gelangt.

Bei genügendem Rohstoff- und Flüssigkeitsnachschub wird, unterstützt durch das Rührwerk 4, 6, das entweder gewaschene oder vordispergierte Rohmaterial über die Überlaufkante 20 in den Austrittsschacht 16 geworfen und gelangt dort in das zweite Zerkleinerungsaggregat 18. Dieses zweite Zerkleinerungsaggregat ist meist ein Feinzerkleinerungsaggregat, welches zusätzlich eine disintegrierende Wirkung auf das Material ausübt. Das zweite Zerkleinerungsaggregat 18 ist an seiner Austrittsseite mit einem Sieb geeigneter Lochweite verschlossen, so daß nur solches Material den Ausgang des zweiten Zerkleinerungsaggregates passieren kann, welches bereits eine genügende Feinheit aufweist. Zu grobes Material wird im zweiten Zerkleinerungsaggregat weiterbearbeitet, bis es das Austrittssieb passieren kann. Dieses Austrittssieb kann je nach Anforderungen Lochweiten zwischen 5 und 15 mm aufweisen, allgemein haben sich jedoch Lochweiten im Bereich von 8 bis 12 mm als geeignet erwiesen.

Die aus dem Austrittsschacht 16 austretende, in der Vorrichtung bearbeitete Rohstoffsuspension kann direkt in eine Auffangbütte gelangen oder zuerst in ein geeignetes Entwässerungsaggregat, in dem der Rohstoff von Spülwasser befreit wird und dann in eingedickter Form in eine Auffangbütte gelangt.

Die Fig. 2a-b stellen mögliche Ausgestaltungen der in den Zerkleinerungsaggregaten einsetzbaren Werkzeuge jeweils in schematischer Seitenansicht und in schematischer Stirnansicht dar.

Die Fig. 2a zeigt ein rein schneidendes Arbeitswerkzeug. Aus der Seitenansicht ist zu erkennen, daß die auf den parallelen Wellen 40 angeordneten Schneidmesser 42 wechselweise ineinandergreifen. Aus der links neben der Seitenansicht wiedergegebenen stirnseitigen Ansicht ist erkennbar, daß die Schneidmesser 42 eine geschlossene Umfangskante aufweisen. Zwei sich gegenüberliegende Messerscheiben berühren sich in ihrem Überlappungsbereich und erzeugen damit zwischen sich eine Scherwirkung.

Fig. 2b zeigt ein Arbeitswerkzeug, bei dem die parallelen Wellen 40 mit Hackmessern 44 besetzt sind. Dies ist an der linken stirnseitigen Ansicht gut erkennbar. Bei dem Arbeitswerkzeug der Fig. 2c handelt es sich um eine ähnliche Ausführung wie bei derjenigen nach Fig. 2b, auf den Wellen 40 befindet sich jedoch eine größere Anzahl dünnerer Hackmesser 46, die insgesamt einen höheren Grad an Zerkleinerung ausführen.

Die Fig. 2d stellt ein Arbeitswerkzeug dar, welches für Feinzerkleinerung und gleichzeitige Disintegrierung geeignet ist. Wie aus der Figur zu erkennen ist, ist hier nur ein einziger Werkzeugträger 48 vorgesehen, der entlang Zylindermantellinien mit Werkzeugen 50 besetzt ist, deren Ausbildung besser in der linken stirnseitigen Ansicht erkennbar ist. Diese Werkzeuge 50 arbeiten mit Gegenwerkzeugen zusammen, die an der inneren Mantelfläche eines entsprechenden (in der Fig. 2d nicht gezeigten) Gehäuses zusammenarbeiten. Eine ähnliche Ausführungsform ist in Fig. 2f prinzipiell dargestellt. Hier ist ein Gehäuse 52 zu erkennen, in dem ein Werkzeugträger 54 rotierbar angeordnet ist, welcher mit drei Reihen von Werkzeugen 56 besetzt ist, welche mit Gegenwerkzeugen 58 am Gehäuse 52 zusammenarbeiten. Bei dem in Fig. 2f dargestellten Zerkleinerungsaggregat ist auch oben eine Materialzuführöffnung 60 erkennbar, während das Gehäuse 52 an der Unterseite durch eine gebogene Siebplatte 62 abgeschlossen ist. Nur genügend zerkleinertes Material kann das Aggregat durch diese Siebplatte 62 verlassen, noch grobere Bestandteile werden solange im Zerkleinerungsaggregat weiterbearbeitet, bis sie ebenfalls eine genügende Feinheit für den Durchtritt durch das Sieb erreicht haben.

Ein besonderes Zerkleinerungsaggregat ist in Fig. 2e dargestellt. Hierbei handelt es sich um einen Zopfschneider. Erkennbar ist links ein Zopfrohr 64, in dem der Zopf geführt ist, während rechts um eine Achse rotierbar drei Scheibensägen 66 vorgesehen sind, die nacheinander durch eine (nicht sichtbare) Unterbrechung im Zopfrohr bewegt werden können, um von dem im Zopfrohr 64 hängenden Zopf nacheinander Stücke abzutrennen. Bei ihrem Rücklauf sind die Scheibensägen 66 an einer Schärfeinrichtung 68 vorbeibewegbar. Diese schematische Darstellung soll nur eine Möglichkeit für die Ausbildung eines solchen Werkzeuges darstellen.

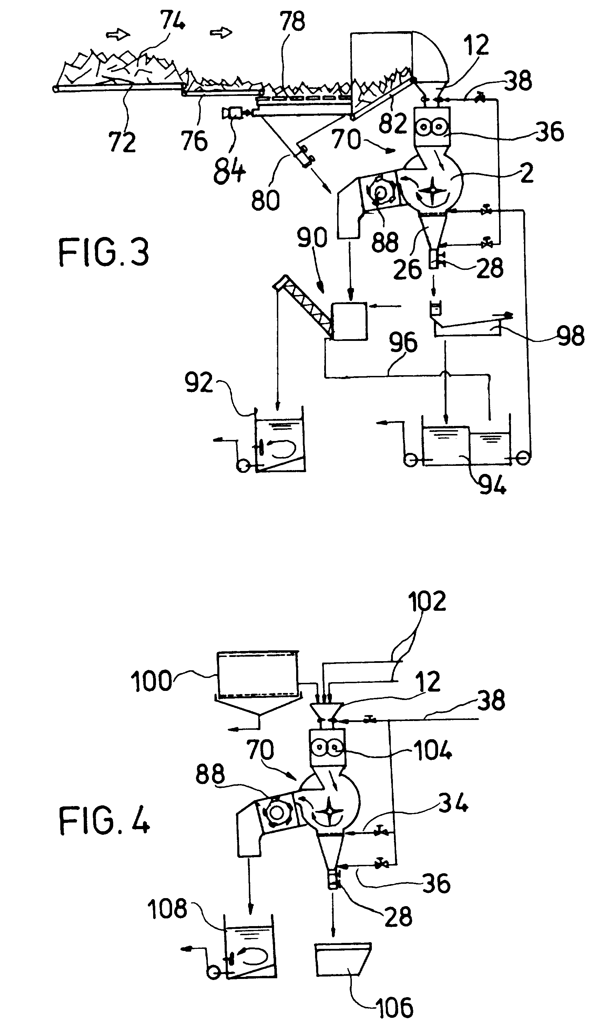

In Fig. 3 ist ein erstes Beispiel für den Einsatz der vorstehend beschriebenen Vorrichtung für die Disintegration von Verpackungsstoffen dargestellt. Es handelt sich hier um eine Teilanlage für die Wiederaufbereitung von gebrauchtem, doppelseitig folienbeschichtetem Getränkekarton.

Zu erkennen ist als zentrale Einheit die hier mit der Bezugsziffer 70 versehene Disintegrationsvorrichtung. Auf ein erstes Förderband 72 wird gebrauchter Getränkekarton 74 lose aufgegeben. Ein anschließendes Förderband 76 läuft mit erhöhter Geschwindigkeit, um den kontinuierlichen Strom an Getränkekarton zu verdünnen, d.h., den Getränkekarton möglichst zu vereinzeln. Dieser Strom an Rohmaterial läuft dann über ein Schwingsieb 78, mit dessen Hilfe möglichst Schwerschmutz, wie Steine, Metallteile und dergl. aus dem Rohmaterial abgeschieden wird. Dieser Schwerschmutz kann dann über eine Schleuse 80 aus dem System entfernt werden.

Das so von Schwerschmutz befreite Material wird dann über ein drittes Förderband 82 in den Aufgabetrichter 12 der Vorrichtung 70 gefördert. Kleinere Kartonstücke, die mit dem Schwerschmutz das Schwingsieb 78 passieren, können mittels eines Gebläses 84 dem weiterzuverarbeitenden Getränkekarton im Bereich des Förderbandes 82 wieder zugeführt werden.

Als erstes Zerkleinerungsaggregat 86 ist in der Vorrichtung 70 ein solches vorgesehen, welches ausschließlich eine schneidende Funktion ausübt, um den Getränkekarton in zur Reinigung umspülbare Stücke von etwa 5 cm Größe zu zerteilen. Vor dem ersten Zerkleinerungsagglegat 86 wird über den Flüssigkeitseinlauf 38 Spülflüssigkeit, im allgemeinen nur Wasser, in das System eingeführt, so daß bereits beim ersten Zerkleinern des Rohstoffes ein Wascheffekt eintritt. Die Wäsche des Rohmaterials wird dann im Gehäuse 2 der Vorrichtung vervollständigt, wonach das Rohmaterial in das zweite Zerkleinerungsaggregat 88 gelangt, welches als Feinzerkleinerer mit gleichzeitig disintegrierender Wirkung ausgebildet ist. Das disintegrierte Rohmaterial gelangt dann in einen Drainator, in dem es weitgehend von Spülflüssigkeit befreit und somit eingedickt wird. Der eingedickte Stoff gelangt schließlich in eine Rührbütte 92, von wo aus er zur Weiterverarbeitung gelangen kann.

Das vom Stoff abgetrennte Spülwasser aus dem Drainator 90 gelangt über eine Leitung 96 in den rechten Teil einer geteilten Wasserbütte 94, von wo aus es als Spülflüssigkeit in der Vorrichtung 70 wiederverwendet wird. Aus dem unteren Stutzen 28 der Vorrichtung 70 wird ständig ein Teil der Spülflüssigkeit zusammen mit dem sich dort ansammelnden Schwerschmutz abgezogen. Der Schwerschmutz wird auf einer Siebeinrichtung 98 abgefangen und das abgezogene Spülwasser gelangt in den linken Teil der geteilten Wasserbütte 94, von wo ständig ein Anteil der Werkskläranlage zugeführt wird.

Bei der vorstehend beschriebenen Verwendung kann die Vorrichtung 70 nur im Dünnstoffbereich betrieben werden, weil im Gehäuse 2 der Vorrichtung nur ein Waschen der Verpackungsmaterialabschnitte stattfinden soll. Die Feinzerkleinerung und Disintegration setzt erst im Zerkleinerungsaggregat 2 ein und die Disintegration wird in der nachfolgenden Rührbütte dann noch vervollständigt.

Als Zerkleinerungsaggregat 2 wurde in diesem Fall im Rahmen der Entwicklungsarbeiten mit Erfolg ein Wasch-/Schneidgranulator CS500/1000IIIa der Firma Condux in Hanau eingesetzt, dessen Werkzeuge für den hier vorgenommenen Verfahrensschritt beispielsweise geeignet sind.

Fig. 4 zeigt einen Anwendungsfall, bei dem die Vorrichtung 70 lediglich zum Aufarbeiten von Abfallmaterialien verwendet wird, die durch Aussortieren in einer herkömmlichen Altpapieraufbereitungsanlage anfallen. Der aus dem Pulper der Altpapieraufbereitungsanlage anfallende Leichtschmutz wird in einer Siebtrommel 100 entwässert und dem Aufgabetrichter der Vorrichtung 70 zugeführt. Gleichzeitig wird in den Aufgabetrichter 12 auch noch derjenige Leichtschmutz aus der Altpapieraufbereitung eingeführt, der in den Faserstoffsortierstufen anfällt. Diese Rohmaterialzuführung ist durch die Linien 102 angedeutet. Als erstes Zerkleinerungsaggregat 104 ist hier ein solches vorgesehen, welches mehr eine zerhackende Funktion ausübt und demjenigen nach Fig. 2c entspricht. Bei Versuchen konnten die Werkzeuge des "Abfallhai Typ CAH200/400" der Firma Condux in Hanau mit Erfolg eingesetzt werden. Eine vorherige Befeuchtung des Rohstoffes über den Wasseranschluß 38 ist hier nicht nötig, weil das Material bereits im feuchten Zustand zur Vorrichtung 70 gelangt. In die Vorrichtung wird über die Anschlüsse 34 und 36 lediglich Verdünnungswasser zugegeben. Auch eine Wasserentnahme über den Stutzen 28 entfällt hier, da an dem Material kein Waschvorgang ausgeführt zu werden braucht. Über den Stutzen 28 wird lediglich von Zeit zu Zeit Schwerschmutz entnommen, der in einen Deponiebehälter 106 gelangt. Das zweite Zerkleinerungsaggregat 88 ist ähnlich ausgebildet wie beim Beispiel der Fig. 3. Aus der Vorrichtung 70 gelangt der bearbeitete Stoff in eine Rührbütte 108, aus der er der weiteren Aufbereitung zugeführt werden kann.

Je nach Anwendungsfall kann die Vorrichtung 70 im Dünnstoff- oder auch im Dickstoffbereich betrieben werden. Im Dünnstoffbereich hat die behandelte Suspension noch einen echt flüssigen Charakter, während sie im Dickstoffbereich bereits einen stark breiigen Charakter aufweist. Das Arbeiten im Dickstoffbereich fördert die Disintegration des Stoffes, ist aber dann nicht möglich, wenn ein Wasch- oder Lösevorgang vorgenommen werden soll.

Die beschriebene Vorrichtung ist äußerst vielseitig einsetzbar. So sind je nach zu verarbeitendem Rohstoff unterschiedlichste Behandlungsmaßnahmen möglich. Hierzu gehören das schneidende Zerteilen, das Disintegrieren, das Feinzerkleinern, das Waschen des Rohstoffes, das Auf- und Ablösen von Klebstoffen und dergl., wobei ohne aber auch mit Zusatz von unterstützenden Chemikalien gearbeitet werden kann.

Für einen effektiven Betrieb der beschriebenen Vorrichtung ist es wichtig, daß das zu verarbeitende Material der Vorrichtung nicht schubweise sondern möglichst in einem kontinuierlichen, wohldosierten Strom zugeführt wird. Dies führt nicht nur zu einer intensiveren und besseren Bearbeitung des Stoffes, es kann gleichzeitig auch die Energieaufnahme der Vorrichtung reduziert werden.

Die beschriebene Vorrichtung ist in ihrer bevorzugten Ausführungsform insbesondere durch die austauschbaren Zerkleinerungsaggregate ausgesprochen reparatur- und wartungsfreudig. Da die im zu verarbeitenden Rohstoff enthaltenen Verunreinigungen vor Eintritt des Materials in die Vorrichtung nicht vollständig kontrollierbar sind, sind die Zerkleinerungsaggregate unter Umständen einem sehr hohen Verschleiß unterworfen. Für einen ungestörten Betrieb ist es daher wichtig, daß die Aggregate schnell gegen Reserveaggregate ausgetauscht werden können.

## Patentansprüche

1. Vorrichtung zum Disintegrieren von flexiblen Verpackungsstoffen mit
- einem trogbildenden, im wesentlichen geschlossenen Gehäuse (2),
- mindestens einem mit dem Gehäuseinneren in Verbindung stehenden Rohstoffzu&hrschacht (10),
- einem in dem mindestens einen Rohstoffzuführschacht (10) angeordneten ersten Zerkleinerungsaggregat (14),
- mindestens einem mit dem Gehäuseinneren in Verbindung stehenden Austrittsschacht (16),
- einem in dem mindestens einen Austrittsschacht (16) angeordneten zweiten Zerkleinerungsaggregat (18),
- einem im Gehäuseinneren angeordneten, angetriebenen Förderorgan (4, 6) und
- Mitteln zur Flüssigkeitszugabe in das Gehäuse,
wobei zwischen Gehäuse (2) und Austrittsschacht (16) ein Überlaufwehr (20) vorgesehen ist, welches im wesentlichen die Flüssigkeitsfüllhöhe im Gehäuse (2) bestimmt.

2. Vorrichtung nach Anspruch 1, dadurch gekennzeichnet, daß das Gehäuse (2) zumindest in seinem unteren Bereich als eine im wesentlichen zylindrische Trommel mit horizontaler Zylinderachse ausgebildet ist.

3. Vorrichtung nach Anspruch 1 oder 2, dadurch gekennzeichnet, daß das Förderorgan (4, 6) eine um eine horizontale Achse rotierbare Welle (4) aufweist, die mit im wesentlichen radialen Förder- bzw. Agitationselementen (6) besetzt ist.

4. Vorrichtung nach mindestens einem der Ansprüche 1 bis 3, dadurch gekennzeichnet, daß der Rohstoffzuführschacht (10) im oberen Bereich des Gehäuses (2) angeordnet ist.

5. Vorrichtung nach mindestens einem der Ansprüche 1 bis 4, dadurch gekennzeichnet, daß der Austrittsschacht (16) seitlich am Gehäuse (2) angeordnet ist.

6. Vorrichtung nach mindestens einem der Ansprüche 3 bis 5, dadurch gekennzeichnet, daß das untere Ende des Rohstoffzuführschachtes (10) auf die in Abwärtsbewegung befindlichen radialen Elemente (6) des Förderorgans (4, 6) gerichtet ist.

7. Vorrichtung nach mindestens einem der Ansprüche 3 bis 6, dadurch gekennzeichnet, daß der Austrittsschacht (16) an derjenigen Seite des Gehäuses (2) angeordnet ist, an der sich die radialen Elemente (6) des Förderorgans (4, 6) in Aufwärtsbewegung befinden.

8. Vorrichtung nach mindestens einem der Ansprüche 1 bis 7, dadurch gekennzeichnet, daß Flüssigkeitszugabemittel (38) am Rohstoffzuführschacht (10) vorgesehen sind.

9. Vorrichtung nach Anspruch 8, dadurch gekennzeichnet, daß die Flüssigkeitszugabemittel
(38) oberhalb des ersten Zerkleinerungsaggregates (14) angeordnet sind.

10. Vorrichtung nach mindestens einem der Ansprüche 1 bis 9, dadurch gekennzeichnet, daß sich an den unteren Bereich des Gehäuses (2) eine Schwerschmutzsammelkammer (26) anschließt.

11. Vorrichtung nach Anspruch 10, dadurch gekennzeichnet, daß die Schwerschmutzsammelkammer (26) mit einer Schwerschmutzausschleuseinrichtung (28) versehen ist.

12. Vorrichtung nach mindestens einem der Ansprüche 1 bis 11, dadurch gekennzeichnet, daß im unteren Bereich des Gehäuses (2), gegebenenfalls an der Schwerschmutzsammelkammer (26), ein Flüssigkeitsentnahmestutzen vorgesehen ist.

13. Vorrichtung nach mindestens einem der Ansprüche 10 bis 12, dadurch gekennzeichnet, daß die Schwerschmutzsammelkammer (26) als ein sich an die Unterseite des Gehäuses (2) anschließender Zyklon ausgebildet ist.

14. Vorrichtung nach Anspruch 13, dadurch gekennzeichnet, daß im oberen Bereich des Zyklons ein tangentialer Flüssigkeitseintritt (34) vorgesehen ist.

15. Vorrichtung nach Anspruch 13 oder 14, dadurch gekennzeichnet, daß im unteren Bereich des Zyklons ein Anschluß (36) für Spülflüssigkeit vorgesehen ist.

16. Vorrichtung nach mindestens einem der Ansprüche 1 bis 15, dadurch gekennzeichnet, daß die Zerkleinerungsaggregate als austauschbare Einschubeinheiten ausgebildet sind, die abdichtend in entsprechende Aufnahmen (14, 18) im Rohstoffzuführschacht (10) bzw. im Austrittsschacht (16) einsetzbar sind.

17. Vorrichtung nach mindestens einem der Ansprüche 1 bis 16, dadurch gekennzeichnet, daß im Austrittsschacht (16) hinter dem zweiten Zerkleinerungsaggregat (Figur 2f) ein Sieb (62) angeordnet ist.

18. Vorrichtung nach Anspruch 17, dadurch gekennzeichnet, daß das Sieb (62) wahlweise Lochweiten von 8 bis 15 mm aufweist.

19. Vorrichtung nach mindestens einem der Ansprüche 1 bis 18, dadurch gekennzeichnet, daß das erste und/oder das zweite Zerkleinerungsaggregat zwei quer zum jeweiligen Schacht verlaufende parallele Werkzeugwellen (40) aufweist, die mit wechselseitig ineinandergreifenden rotierenden Werkzeugen (42, 44, 46) versehen sind.

20. Vorrichtung nach Anspruch 19, dadurch gekennzeichnet, daß die Werkzeuge gegenseitig miteinander in Eingriff stehende Scheibenmesser (42) sind.

21. Vorrichtung nach Anspruch 19, dadurch gekennzeichnet, daß die Werkzeuge wechselseitig ineinandergreifende Hack- oder Zerreißwerkzeuge (44, 46) sind.

22. Vorrichtung nach mindestens einem der Ansprüche 1 bis 18, dadurch gekennzeichnet, daß das erste und/oder das zweite Zerkleinerungsaggregat einen um eine quer zum jeweiligen Schacht verlaufende Achse rotierbaren Werkzeugträger (48) aufweist, der entlang eines gedachten Zylindermantels mit schneidenden und/oder quetschenden Werkzeugen (50, 56) versehen ist, die mit entsprechenden stationären Gegenwerkzeugen (58) zusammenarbeiten, welche an der Innenfläche eines zumindest teilweise den Werkzeugträger (48) umgebenden Aggregatgehäuses (52) angeordnet sind.

## Claims

1. A device for the disintegration of flexible packaging materials, with
- a housing (2) which is essentially closed and designed in a trough shape,
- at least one raw material intake shaft (10) connected to the inside of the housing,
- an initial comminution device (14) arranged in the raw material intake shaft (10), of which there is at least one,
- at least one outlet shaft (16) connected to the inside of the housing,
- a second comminution device (18) arranged in the outlet shaft, of which there is at least one,
- a powered delivery device (4, 6) arranged in the inside of the housing, and
- devices for the delivery of liquid into the housing,
in which context, an overflow protection device (20) is provided between the housing (2) and the outlet shaft (16), which essentially determines the filling level of the liquid in the housing (2).

2. A device according to Claim 1, characterised by the fact that the housing (2) is designed, at least in its lower section, as an essentially cylindrical drum, with a horizontal cylinder axis.

3. A device according to Claims 1 or 2, characterised by the fact that the delivery device (4, 6) features a shaft (4) capable of rotation about a horizontal axis, which is occupied by essentially radial delivery and agitation elements (6).

4. A device according to at least one of Claims 1 to 3, characterised by the fact that the raw material intake shaft (10) is arranged in the upper part of the housing (2).

5. A device according to at least one of Claims 1 to 4, characterised by the fact that the outlet shaft (16) is arranged laterally to the housing (2).

6. A device according to at least one of Claims 3 to 5, characterised by the fact that the lower end of the raw material intake shaft (10) is directed towards the radial elements (6) of the delivery device (4, 6), which are effecting an upwards motion.

7. A device according to at least one of Claims 3 to 6, characterised by the fact that the outlet shaft (16) is arranged on that side of the housing (2) on which the radial elements (6) of the delivery device (4, 6) is in upwards motion.

8. A device according to at least one of Claims 1 to 7, characterised by the fact that media for the introduction of liquid (38) are provided for at the raw material intake shaft (10).

9. A device according to Claim 8, characterised by the fact that the media for the introduction of liquid (38) are arranged above the first comminution device (14).

10. A device according to at least one of Claims 1 to 9, characterised by the fact that the lower part of the housing (2) encloses a heavy-duty dirt collection chamber (26).

11. A device according to Claim 10, characterised by the fact that the heavy-duty dirt collection chamber (26) is provided with a heavy-duty dirt ejection device (28).

12. A device according to at least one of Claims 1 to 11, characterised by the fact that a liquid draw-off nozzle is provided in the lower area of the housing (2), if possible at the heavy-duty dirt collection chamber (26).

13. A device according to at least one of Claims 10 to 12, characterised by the fact that the heavy-duty dirt collection chamber (26) is designed as a cyclone connected to the underside of the housing (2).

14. A device according to Claim 13, characterised by the fact that provision is made in the upper part of the cyclone for a tangential liquid intake (34).

15. A device according to Claims 13 or 14, characterised by the fact that a connection (36) is provided in the lower part of the cyclone for flushing liquid.

16. A device according to at least one of Claims 1 to 15, characterised by the fact that the comminution devices are designed as replaceable plug-in units, which can be located in corresponding cut-outs (14, 18) in the raw materials intake shaft (10) or in the outlet shaft (16).

17. A device according to at least one of Claims 1 to 16, characterised by the fact that a screening element (62) is arranged in the outlet shaft (16) behind the second comminution device (Figure 2f).

18. A device according to Claim 17, characterised by the fact that the screening element (62) features optionally hole widths from 8 to 15 mm.

19. A device according to at least one of Claims 1 to 18, characterised by the fact that the first and/or second comminution device features two parallel tool shafts (40) running parallel to the individual shafts, which are provided with rotating tools (42, 44, 46), which engage with one another alternately.

20. A device according to Claim 19, characterised by the fact that the tools are disk blades (42) which mutually engage with one another.

21. A device according to Claim 19, characterised by the fact that the tools are chopping or tearing tools (44, 46) which engage mutually with one another.

22. A device according to at least one of Claims 1 to 18, characterised by the fact that the first and/or the second comminution device features a tool carrier (48), capable of rotating about an axis which runs parallel to the individual shaft, the said tool carrier being provided for along a hypothetical cylinder casing with cutting and/or crushing tools (50, 56), which interacts with corresponding stationary counter-tools (58), which are arranged on the inner face of a device housing which at least partially surrounds the tool carrier (48).

## Revendications

1. Dispositif pour la désintégration de matières d'emballage flexibles comportant :
- une enveloppe (2) essentiellement fermée en forme d'auge;
- au moins un conduit d'amenée de matière première (10) en communication avec l'intérieur de l'enveloppe;
- une première unité de fragmentation (14) disposée dans le au moins un conduit d'amenée de matière première (10);
- au moins un conduit de sortie (16) en communication avec l'intérieur de l'enveloppe;
- une deuxième unité de fragmentation (18) disposée dans le au moins un conduit de sortie (16);
- un organe de transport (4, 6) entraîné, disposé à l'intérieur de l'enveloppe, et
- des moyens pour l'admission de liquide dans l'enveloppe,
un bord de déversement (20), qui détermine en substance la hauteur de remplissage en liquide de l'enveloppe (2), étant prévu entre l'enveloppe (2) et le conduit de sortie (16).

2. Dispositif suivant la revendication 1, caractérisé en ce que l'enveloppe (2) est formée, au moins dans sa zone inférieure, comme un fût sensiblement cylindrique comportant un axe de cylindre horizontal.

3. Dispositif suivant la revendication 1 ou 2, caractérisé en ce que l'organe de transport (4, 6) comporte un arbre (4) pouvant tourner autour d'un axe horizontal, qui est garni d'éléments de transport ou d'agitation (6) sensiblement radiaux.

4. Dispositif suivant l'une quelconque des revendications 1 à 3, caractérisé en ce que le conduit d'amenée de matière première (10) est disposé dans la zone supérieure de l'enveloppe (2).

5. Dispositif suivant l'une quelconque des revendications 1 à 4, caractérisé en ce que le conduit de sortie (16) est disposé sur le côté de l'enveloppe (2).

6. Dispositif suivant l'une quelconque des revendications 3 à 5, caractérisé en ce que l'extrémité inférieure du conduit d'amenée de matière première (10) est dirigée vers les éléments radiaux (6) de l'organe de transport (4, 6) qui se trouvent en mouvement descendant.

7. Dispositif suivant l'une quelconque des revendications 3 à 6, caractérisé en ce que le conduit de sortie (16) est disposé au côté de l'enveloppe (2) où les éléments radiaux (6) de l'organe de transport (4, 6) se trouvent en mouvement ascendant.

8. Dispositif suivant l'une quelconque des revendications 1 à 7, caractérisé en ce que des moyens d'admission de liquide (38) sont prévus au niveau du conduit d'amenée de matière première (10).

9. Dispositif suivant la revendication 8, caractérisé en ce que les moyens d'admission de liquide (38) sont disposés au-dessus de la première unité de fragmentation (14).

10. Dispositif suivant l'une quelconque des revendications 1 à 9, caractérisé en ce qu'une chambre collectrice de boue lourde (26) est raccordée à la zone inférieure de l'enveloppe (2).

11. Dispositif suivant la revendication 10, caractérisé en ce que la chambre collectrice de boue lourde (26) est pourvue d'une installation (28) d'évacuation de boue lourde.

12. Dispositif suivant l'une quelconque des revendications 1 à 11, caractérisé en ce qu'une tubulure de drainage de liquide est prévue dans la zone inférieure de l'enveloppe (2) et, le cas échéant, au niveau de la chambre collectrice de boue lourde (26).

13. Dispositif suivant l'une quelconque des revendications 10 à 12, caractérisé en ce que la chambre collectrice de boue lourde (26) a la forme d'un cyclone raccordé au côté inférieur de l'enveloppe (2).

14. Dispositif suivant la revendication 13, caractérisé en ce qu'une admission de liquide tangentielle (34) est prévue dans la zone supérieure du cyclone.

15. Dispositif suivant la revendication 13 ou 14, caractérisé en qu'un raccordement (36) pour un liquide de rinçage est prévu dans la zone inférieure du cyclone.

16. Dispositif suivant l'une quelconque des revendications 1 à 15, caractérisé en ce que les unités de fragmentation ont la forme d'unités d'insertion interchangeables qui sont insérées de façon étanche dans des logements correspondants (14, 18) dans le conduit d'amenée de matière première (10) ou dans le conduit de sortie (16).

17. Dispositif suivant l'une quelconque des revendications 1 à 16, caractérisé en ce qu'un crible (62) est disposé dans le conduit de sortie (16) derrière la deuxième unité de fragmentation (Fig. 2f).

18. Dispositif suivant la revendication 17, caractérisé en ce que le crible (62) présente des ouvertures allant au choix de 8 à 15 mm.

19. Dispositif suivant l'une quelconque des revendications 1 à 18, caractérisé en ce que la première et/ou la deuxième unité de fragmentation présente deux arbres porte-outils (40) parallèles s'étendant transversalement au conduit correspondant, arbres qui sont pourvus d'outils (42, 44, 46) rotatifs en engrènement réciproque.

20. Dispositif suivant la revendication 19, caractérisé en ce que les outils sont des lames circulaires (42) en prise réciproque.

21. Dispositif suivant la revendication 19, caractérisé en ce que les outils sont des outils de hachage ou de rupture (44, 46) en engrènement réciproque.

22. Dispositif suivant l'une quelconque des revendications 1 à 18, caractérisé en ce que la première et/ou la deuxième unité de fragmentation comporte un porte-outils (48) pouvant tourner autour d'un axe transversal au conduit correspondant, qui est pourvu le long d'une enveloppe cylindrique imaginaire d'outils de coupe et/ou de broyage (50, 56) qui coopèrent avec des contre-outils stationnaires correspondants (58) qui sont disposés sur la surface intérieure d'une enveloppe (52) entourant au moins partiellement le porte-outils (40).
